Europäisches Patentamt

**European Patent Office**

Office européen des brevets

(19)

(11) Veröffentlichungsnummer : **0 079 077**
**B1**

(12) **EUROPÄISCHE PATENTSCHRIFT**

(45) Veröffentlichungstag der Patentschrift :
**16.04.86**

(21) Anmeldenummer : **82110301.7**

(22) Anmeldetag : **09.11.82**

(51) Int. Cl.⁴ : **C 23 C  4/06**, C 23 C  4/12,
C 22 C  19/05// C09D5/18

(54) **Hochtemperaturschutzschicht.**

(30) Priorität : **11.11.81 DE 3144745**

(43) Veröffentlichungstag der Anmeldung :
**18.05.83 Patentblatt 83/20**

(45) Bekanntmachung des Hinweises auf die Patenterteilung : **16.04.86 Patentblatt 86/16**

(84) Benannte Vertragsstaaten :
**CH DE FR GB LI**

(56) Entgegenhaltungen :
DE-A- 2 025 530
DE-A- 2 223 715
DE-A- 2 627 151
DE-A- 2 749 444
DE-A- 2 758 618
DE-A- 2 816 520
US-A- 3 926 691

(73) Patentinhaber : **BBC Aktiengesellschaft Brown,
Boveri & Cie.
Haselstrasse
CH-5401 Baden (CH)**

(72) Erfinder : **Nicoll, Andrew R.
Fohlenweide 17
D-6836 Oftersheim (DE)**

(74) Vertreter : **Kempe, Wolfgang, Dr. et al
c/o Brown, Boveri & Cie AG Postfach 351
D-6800 Mannheim 1 (DE)**

## Beschreibung

Die Erfindung bezieht sich eine Hochtemperaturschutzschicht gemäß dem Oberbegriff des Patentanspruches 1.

Solche Hochtemperaturschutzschichten kommen vor allem dort zur Anwendung, wo das Grundmaterial von Bauelementen aus wärmefesten Stählen und/oder Legierungen, die bei Temperaturen über 600 °C verwendet werden, zu schützen sind. Durch diese Hochtemperaturschutzschichten soll die Wirkung von Hochtemperaturkorrosionen vor allem von Schwefel und Ölaschen verlangsamt werden. Die Hochtemperaturschutzschichten werden direkt auf das Grundmaterial aufgetragen. Bei Bauelementen von Gasturbinen sind solche Hochtemperaturschutzschichten von besonderer Bedeutung. Hochtemperaturschutzschichten werden vor allem auf Lauf- und Leitschaufeln sowie auf Wärmestausegmente von Gasturbinen aufgetragen. Für die Fertigung dieser Bauelemente wird vorzugsweise ein austenitisches Material auf der Basis von Nickel, Kobalt oder Eisen verwendet. Vor allem kommen für die Herstellung von Gasturbinenbauteilen Nickel-Superlegierungen als Grundmaterial zur Anwendung. Die aufgetragenen Hochtemperaturschutzschichten bestehen vorzugsweise aus chromhaltigen Legierungen.

Aus der DE-OS-28 16 520 ist eine Hochtemperaturschutzschicht für Gasturbinenbauteile bekannt. Die Schutzschicht besteht aus einer Matrix die 40 bis 70 Gew. % Nickel, 15 bis 30 Gew. % Chrom sowie 3 bis 6 Gew. % Bor enthält. Die Gewichtsangaben beziehen sich auf das Gesamtgewicht der Matrix. Zusätzlich sind 30 bis 40 Vol. % Chromborid, bezogen auf das Gesamtvolumen der Legierung in die Schutzschicht eindispergiert.

Die Schutzwirkung dieser Hochtemperaturschutzschicht beruht darauf, daß sich bei einem Korrosionsangriff Korrosionsprodukte in Form von Deckschichten bilden, welche korrosionsfest sind und die Oberfläche gleichmäßig, homogen, dicht und dauerhaft bedecken, so daß insbesondere das Grundmaterial der Bauelemente vor weiteren Korrosionsangriffen geschützt ist. Diese Deckschichten, die vor allem Chromoxid enthalten, sind mit der Schutzschicht sowohl chemisch als auch mechanisch gut verträglich und unempfindlich gegenüber schockartiger thermischer und/oder mechanischer Beanspruchung. Darüberhinaus sind chromoxidhaltige Deckschichten gegen einen Angriff schwefelhaltiger Gaskomponenten widerstandsfähig, was insbesondere beim Einsatz solcher Schutzschichten für Gasturbinenbauelemente von Bedeutung ist.

Von Nachteil ist bei diesen eingangs beschriebenen Hochtemperaturschutzschichten jedoch, daß diese chromoxidhaltigen Deckschichten bei Temperaturen, die über 900 °C liegen, abgedampft werden. Dadurch kommt es zu einem schnellen Verbrauch der gegen die schwefel- und sauerstoffhaltige Atmosphäre beständigen Deckschicht.

Aus der DE-OS-2 758 618 ist eine hochtemperaturbeständige, abriebfeste Überzugszusammensetzung bekannt. Bei diesem hochtemperaturbeständigen abriebfesten Überzug handelt es sich um eine CoCrAlY-Schicht, die zum Schutz von Metall-Legierungssubstraten gegen Korrosion auf die Oberflächen desselben aufgetragen wird.

Aus der DE-OS-2 223 715 ist eine dispersionsgehärtete Chrom-Kobalt-Nickel-Knetlegierung bekannt, die zusätzlich Aluminium, Titan, Molybdän, Wolfram, Kohlenstoff, Tantal, Niob, Hafnium, Zirkonium, Bor und weitere Oxide metallischer Materialien enthält.

In der DE-OS-2 749 444 ist ein Oxiddispersionsgehärtetes kobalthaltiges Metall beschrieben. Dieses enthält desweiteren Chrom, Aluminium, Nickel, Eisen, Bor, Titan, Hafnium, Vanadium, sowie Molybdän, Wolfram und weitere metallische und nichtmetallische chemische Elemente in geringeren Mengen.

Der Erfindung liegt die Aufgabe zugrunde, eine Hochtemperaturschutzschicht so zu schaffen, daß sich auf ihr eine chromoxidhaltige Deckschicht ausbilden kann, deren Abdampfung bei Temperaturen, die über 900 °C liegen dauerhaft unterbunden wird.

Die Lösung dieser Aufgabe erfolgt gemäß dem Kennzeichen des Patentanspruches 1.

Zur Aufrechterhaltung einer chromoxidhaltigen Deckschicht ist in die Hochtemperaturschutzschicht eine feine Dispersion aus Yttriumoxid eingebracht. Die Matrix, welche die Hochtemperaturschutzschicht bildet, enthält 0,5 bis 2 Gew. % Yttriumoxid bezogen auf das Gesamtgewicht der aufgetragenen Legierung. Die Korngröße des Yttriumoxids beträgt 1-5 µm. Die Hochtemperaturschutzschicht wird durch eine Matrix gebildet, die 40 bis 70 Gew. % Nickel, 15 bis 30 Gew. % Chrom, 3 bis 6 Gew. % Bor, 3,5 Gew.% Silizium und 4,5 Gew.% Eisen bezogen auf das Gesamtgewicht der Legierung enthält. Zusätzlich ist in die Matrix Chromborid in einer Menge von 30 bis 40 Vol. %, bezogen auf das Gesamtvolumen der Legierung mit einer Teilchengröße von 3 bis 15 µm eindispergiert. Bei einer speziellen Ausführungsform der Erfindung besteht die Matrix aus 17 Gew. % Chrom, 3,5 % Silizium, 4,5 % Bor, 4,5 % Eisen, 1 % Yttriumoxid der übrige Anteil besteht aus Nickel. Das Yttriumoxid wird mechanisch an die Oberflächen der Metalle bzw. Metallverbindungen angeheftet, die die Hochtemperaturschutzschicht bilden. Dies geschieht durch Mahlen des Yttriumoxids mit den Metallen bzw. Metallverbindungen in einer Kugelmühle. Die Hochtemperaturschutzschicht wird vorzugsweise mittels Plasma- oder Flammspritzen direkt auf das für die Herstellung des Bauelementes verwendete Grundmaterial aufgetragen. Die Hochtemperaturschutzschicht kann auch mittels Plasmaspritzen bei niedrigem Druck, vorzugsweise bei einem Druck der kleiner als $6,7 \times 10^5$ Pa (50 Torr) ist, auf das Grundmaterial aufgetragen werden. Beim Auftragen des in der Kugelmühle gewonnenen Pulvers ist festzustellen, daß die Yttriumoxid-Teilchen nicht größer werden, d. h. es kommt zu keiner Anlagerung von mehreren Yttriumoxid-Teilchen an ein Drittes. Anschließend wird die Hochtemperaturschutzschicht wärmebehandelt und vakuumgesintert. Die Wärmebehandlung erfolgt zwischen 1 050 und 1 080 °C. Bei der Wärmebehandlung wird die Hochtemperaturschutzschicht selbstfließend, so daß die beim Plasmaspritzen gebildeten Poren verschlossen werden und gleichzeitig eine ausreichende Diffusion der Schichtelemente in das Grundmaterial möglich wird.

Unter Betriebsbedingungen löst sich bei der thermischen Belastung der erfindungsgemäßen Hochtemperaturschutzschicht das Chromborid zunächst langsam auf und diffundiert an die Oberfläche, wo borhaltige Verbindungen gebildet werden. Das freigewordene Chrom diffundiert ebenfalls, jedoch langsamer, an die Oberfläche der Hochtemperaturschutzschicht und bildet damit der sauerstoffhaltigen Atmosphäre die gewünschte Chromoxid-Deckschicht, die den eigentlichen Korrosionsschutz bewirkt. Der gleiche Effekt wird auch bei Hochtemperaturschutzschichten erzielt, die nur Chrom und kein Chromborid enthalten.

Anhand eines Ausführungsbeispiels, das die Herstellung eines beschichteten Gasturbinenbauteiles beschreibt, wird die Erfindung näher erläutert. Das, insbesondere heißen Gasen ausgesetzte Bauteil einer Gasturbine soll mit der erfindungsgemäßen Schutzschicht versehen werden. Die Beschichtung des Bauteils erfolgt mit Hilfe des Plasmaspritzverfahrens. Das Grundmaterial des zu beschichtenden Bauteils ist bei dem hier beschriebenen Ausführungsbeispiel eine Nickelsuperlegierung IN 738. Das die Hochtemperaturschutzschicht bildende Material besteht aus 17 Gew. % Chrom, 3,5 Gew. % Silizium, 4,5 Gew. % Bor, 4,5 Gew. % Eisen, der übrige Bestandteil ist Nickel. Die angegebene Gewichtsmenge bezieht sich auf das Gesamtgewicht der Legierung. Das oben beschriebene Material wird zusammen mit 1 Gew. % Yttriumoxid, die Gewichtsmenge bezieht sich ebenfalls auf das Gesamtgewicht der Legierung, in einer Kugelmühle zusammengemahlen. Bei dem dabei entstehenden Pulver handelt es sich nicht um ein mechanisch legiertes Pulver, da das Yttriumoxid nur an der Oberfläche der übrigen die Legierung bildenden Metalle bzw. Metallverbindungen haftet. Das Plasmagas ist Argon in einer Menge von etwa 1,2 Nm³/h. Das Trägergas ist ebenfalls Argon in einer Menge von etwa 0,25 bis 0,3 Nm³/h. Der Plasmastrom beträgt 480 Ampere. Die angelegte Spannung beträgt 60 Volt. Das Auftragen der Hochtemperaturschutzschicht erfolgt im wesentlichen gemäß der nachfolgend beschriebenen Art und Weise. Zunächst wird das aus dem Grundmaterial gefertigte Bauelement mit chemischen und/oder mechanischen Mitteln gereinigt und entfettet. Daraufhin werden alle nicht zu beschichtenden Bereiche abgedeckt. Dafür können beispielsweise Blech- oder Graphitabdeckungen dienen. Nun werden die zu beschichtenden Bereiche mechanisch aufgerauht. Anschließend wird das in der Kugelmühle hergestellte Pulver mittels Plasmaspritzen auf das Grundmaterial aufgetragen. Für die anschließende Wärmebehandlung dient ein Hochvakuumglühofen, in dem ein Druck p Aufrecht erhalten wird, der kleiner als $(5 \times 10^{-4}$ Torr) $6,7 \times 10^{-2}$ Pa ist. Nach dem Erreichen des Vakuums wird der Ofen auf 1050 bis 1080 °C aufgeheizt. Diese Temperatur, bei der einerseits die Hochtemperaturschutzschicht mindestens teilweise fließt und daher ihre Poren schließt und andererseits eine Diffusion des beim Plasmaspritzen nur mechanisch mit dem Grundmaterial verbundene Schichtmaterials in das Grundmaterial hinein erfolgt, wird während etwa einer Stunde mit einer Toleranz von etwa 4 °C gehalten, woraufhin die Heizung des Ofens ausgeschaltet wird. Das beschichtete, wärmebehandelte Bauteil kühlt sich dann im Ofen langsam ab.

## Patentansprüche

1. Hochtemperaturschutzschicht, auf der Basis von Nickel, Chrom, und Bor, insbesondere für Gasturbinenbauteile aus einem austenitischen Werkstoff, gekennzeichnet durch eine Matrix mit 40 bis 70 Gew. % Nickel, 15 bis 30 Gew. % Chrom, 3 bis 6 Gew. % Bor, 3,5 Gew. % Silizium und 4,5 Gew. % Eisen bezogen auf das Gesamtgewicht der Legierung, in welche Chromborid in Mengen von 30 bis 40 Vol. % bezogen auf das Gesamtvolumen der Legierung mit einer Teilchengröße von 3 bis 15 µm eindispergiert ist, und daß die Legierung 0,5 bis 2 Gew.% feinverteiltes Yttriumoxid bezogen auf das Gesamtgewicht der Legierung enthält, welches mechanisch an die Oberflächen der die Legierung bildenden Metalle und/oder Metallverbindungen angeheftet ist.

2. Hochtemperaturschutzschicht nach Anspruch 1, dadurch gekennzeichnet, daß die Korngröße des Yttriumoxids 1 bis 5 µm beträgt.

3. Hochtemperaturschutzschicht nach Anspruch 1 oder 2, dadurch gekennzeichnet, daß die Matrix 17 Gew. % Chrom enthält.

4. Hochtemperaturschutzschicht nach einem der Ansprüche 1 bis 3, dadurch gekennzeichnet, daß die Matrix 4,5 Gew. % Bor enthält.

5. Hochtemperaturschutzschicht nach Anspruch 1, dadurch gekennzeichnet, daß die Legierung 3,5 Gew. % Silizium enthält.

6. Verfahren zur Herstellung einer Hochtemperatur-Schutzschicht nach Anspruch 1 bis 5, dadurch gekennzeichnet, daß die Legierung mittels Plasma- oder Flammspritzen auf das Grundmaterial aufgetragen wird.

7. Verfahren zur Herstellung einer Hochtemperatur-Schutzschicht nach Anspruch 6, dadurch gekennzeichnet, daß die Legierung mittels Plasmaspritzen bei einem Druck der kleiner als

6,7 × 10³ Pa (50 Torr) ist, auf das Grundmaterial des Bauelementes aufgetragen wird.

8. Verfahren zur Herstellung einer Hochtemperatur-Schutzschicht nach einem der Ansprüche 6 oder 7, dadurch gekennzeichnet, daß das Yttriumoxid durch mechanisches Mahlen mit den Oberflächen der die Legierung bildenden Metalle und/oder Metallverbindungen verbunden wird.

## Claims

1. High-temperature protective layer based on nickel, chromium and boron, in particular for gas turbine components of an austenitic material, characterized by a matrix with 40 to 70 % by weight of nickel, 15 to 30 % by weight of chromium, 3 to 6 % by weight of boron, 3.5 % by weight of silicone and 4.5 % by weight of iron, relative to the total weight of the alloy, into which matrix chromium boride is dispersed with a particle size of 3 to 15 µm in quantities of 30 to 40 % by volume, relative to the total volume of the alloy, the alloy containing 0.5 to 2 % by weight of finely divided yttrium oxide, relative to the total weight of the alloy, which is mechanically attached to the surfaces of the metals and/or metal compounds forming the alloy.

2. High-temperature protective layer according to Claim 1, characterized in that the particle size of yttrium oxide is 1 to 5 µm.

3. High-temperature protective layer according to Claim 1 or 2, characterized in that the matrix contains 17 % by weight of chromium.

4. High-temperature protective layer according to one of Claims 1 to 3, characterized in that the matrix contains 4.5 % by weight of boron.

5. High-temperature protective layer according to Claim 1, characterized in that the alloy contains 3.5 % by weight of silicone.

6. Process for the preparation of a high-temperature protective layer according to Claims 1 to 5, characterized in that the alloy is applied to the base material by means of plasma-spraying or flame-spraying.

7. Process for the preparation of a high-temperature protective layer according to claim 6, characterized in that the alloy is applied to the base material of the component by means of plasma-spraying under a pressure which is smaller than 6.7 × 10³ Pa (50 mm Hg).

8. Process for the preparation of a high-temperature protective layer according to one of claims 6 or 7, characterized in that the yttrium oxide is bonded to the surfaces of the metals and/or metal compounds forming the alloy by means of mechanical grinding.

## Revendications

1. Couche de protection contre les hautes températures, à base de nickel, de chrome et de bore, en particulier pour composants de turbines à gaz, en un matériau austénitique, caractérisée par une matrice comprenant 40 à 70 % en poids de nickel, 15 à 30 % en poids de chrome, 3 à 6 % en poids de bore, 3,5 % en poids de silicium et 4,5 % en poids de fer sur la base du poids total de l'alliage, dans laquelle est dispersé du borure de chrome, de granulométrie 3 à 15 µm, en des concentrations de 30 à 40 % en volume sur la base du volume total de l'alliage, et en ce que l'alliage contient 0,5 à 2 % en poids d'oxyde d'yttrium finement divisé, sur la base du poids total de l'alliage, lequel est fixé mécaniquement à la surface des métaux et/ou des composés métalliques formant l'alliage.

2. Couche de protection contre les hautes températures selon la revendication 1, caractérisée en ce que la granulométrie de l'oxyde d'yttrium est de 1 à 5 µm.

3. Couche de protection contre les hautes températures selon la revendication 1 ou 2, caractérisée en ce que la matrice contient 17 % en poids de chrome.

4. Couche de protection contre les hautes températures selon l'une des revendications 1 à 3, caractérisée en ce que la matrice contient 4,5 % en poids de bore.

5. Couche de protection contre les hautes températures selon la revendication 1, caractérisée en ce que l'alliage contient 3,5 % en poids de silicium.

6. Procédé de préparation d'une couche de protection contre les hautes températures selon les revendications 1 à 5, caractérisé en ce que l'alliage est appliqué sur le matériau support par projection au plasma ou un chalumeau.

7. Procédé de préparation d'une couche de protection contre les hautes températures selon la revendication 6, caractérisé en ce que l'alliage est appliqué sur le matériau support du composant par projection au plasma sous une pression inférieure à 6,7 · 10³ Pa (50 mm de mercure).

8. Procédé de préparation d'une couche de protection contre les hautes températures selon l'une des revendications 6 ou 7, caractérisé en ce que l'oxyde d'yttrium est lié par broyage mécanique aux surfaces des métaux et/ou composés métalliques formant l'alliage.